# EUROPEAN PATENT APPLICATION

(11) **EP 1 788 096 A1**
(43) Date of publication of application: **23.05.2007**
(21) Application number: 06114104.0
(22) Date of filing: 17.05.2006
(51) Int. Cl.: C12Q 1/68

(54) **Lid for PCR vessel comprising probes permitting PCR amplification and detection of the PCR product by hybridisation without opening the PCR vessel**

(30) Priority: 18.11.2005 WO PCT/EP2005/012382
(71) Applicant: Eppendorf Array Technologies SA, 5000 Namur (BE)
(72) Inventor: Buelow, Sven, 22395 Hamburg (DE); Seippel, Martin, 22391 Hamburg (DE); Remacle, Jose, 5020 Malonne (BE); Alexandre, Isabelle, 5340 Haltinne (BE)
(74) Representative: Rasser, Jacobus Cornelis

(57) **Abstract**

The present invention proposes a simple and effective lid being part of a device having multiwells for performing simultaneous amplifications by PCR and detections of multiple target molecules on unlabeled capture molecules immobilized on the lid.

## Description

### BACKGROUND OF THE INVENTION

### 1. Field of the Invention

The present invention proposes a simple and effective lid being part of a device having multiwells for performing simultaneous amplifications by PCR and detections of multiple target molecules on unlabeled capture molecules immobilized on the lid.

The invention also proposes such a lid carrying capture molecules to perform the detection and quantification of multiple nucleotide molecules in a real-time PCR amplification.

### 2. Description of the Related Art

Detection and quantification of an organism, or a part of it such as a gene, is best performed using the molecular amplification of the nucleotide sequence followed by its detection. Amplification of a given sequence is performed by several methods such as the polymerase chain reaction (PCR) (U.S. Pat. Nos. 4,683,195 and 4,683,202), ligase chain reaction (LCR) (Wu and Wallace, Genomics, Vol. 4, p.560, 1989) or the Cycling Probe Reaction (CPR) (U.S. Pat. No. 5,011,769) which are the most common.

PCR is the most commonly used method of amplification. PCR uses two oligonucleotide primers, an agent for polymerization, a target nucleic acid template. The successive cycles of denaturation of nucleic acid, annealing and extension of the primers produce large number of copies of a particular nucleic acid segment. Segments of genomic DNA can be amplified up to 10 million fold with very high specificity and fidelity when using optimized conditions.

The PCR are usually performed in a single tubes and in wells being part of a 96-wells or 384 well plate format and are thereafter analyzed for the presence of the amplified sequence known as amplicons.

Methods for detecting PCR products are described in U.S. Pat. No. 4,683,195. These methods require an oligonucleotide probe capable of hybridizing with the amplified target nucleic acid. These methods require separate steps of amplification, capture, and detection and generally require several hours for completion.

Due to the large amplification of the PCR process, small levels of DNA carryover from samples with high DNA content, or from previous amplifications, can produce non specific amplicons even in the absence of purposefully added template DNA. Because the possibility of introducing contaminating DNA to a sample increases with the increased number of handling steps required for sample preparation, processing, and analysis is increased, it is preferable to minimize sample handling for their detection and quantification, particularly after the amplification reaction is complete.

Methods and devices for simultaneous amplification and detection of target nucleic acids have been described aimed at minimizing the problems of sample contamination.

One particular way to detect the presence of a given target nucleic acid sequence, and thus of a particular organism, is to monitor the appearance of amplicons during the PCR cycles. The method is called real time PCR. The method gives the possibility of quantifying the amplified sequence as the cycles progress, and to calculate the amount of the sequence in the original sample. The method uses a homogeneous format, and the PCR and the detection are performed within one tube. Performing both amplification and detection in a closed chamber lowers the contamination risk caused by opening the tubes in conventional post-PCR detection methods.

One way to assay for the presence of the amplicons is to take advantage of certain intercalating dyes, the fluorescence of which increases, or changes its parameters, when the dye is intercalated into double stranded DNA. One to the most commonly used dye is SYBR green. The method assays for the amount of double stranded DNA, mainly the amplicons present in the solution. U.S. Pat. No. 4,683,195 and U.S. Pat. No. 6,171,785 also use the introduction of detectable DNA binding agents (such as ethidium bromide) into the amplification reaction, which agents produce a detectable signal in the PCR solution that is enhanced upon binding double-stranded DNA. An increase in fluorescence of the PCR mixture indicates that amplification has occurred. In order to be useful the amplification has to be very specific since non specific amplifications will also lead to a signal.

U.S. Pat. 6,814,934 also proposed an instrument for the detection in real-time of the fluorescent increase occurring in the solution mixture, resulting from the formation of double stranded amplicons during the PCR cycles.

The best detection method for PCR product available to date is based on the use of probes specific of the amplicons, of which the fluorescence varies or is released when the amplicons are formed or are present in the solution. Early methods for detecting PCR products have been described in U.S. Pat. No. 4,683,195. These methods require an oligonucleotide probe capable of hybridizing with the amplified target nucleic acid. These methods require separate steps of amplification, capture, and detection and generally require several hours to be completed.

New methods have been developed, including the molecular beacon probes, the double-dye oligonucleotide probes, the Amplifluor or the Scorpions primers and TaqMan probes. Molecular beacons are structurally similar to the tradition single strand hybridization probe except that the ends of the beacon contain equal length self-complementary segments, which, in the free state, will bond to each other forming a loop terminated by a blunt end stem. The ends of the stem have a fluorescer attached to one side and a quencher attached to the other side, so that it is self quenching in the unbound state. When the beacon attaches to a target amplicon, the fluorophor and quencher become separated in space allowing the sample to fluoresce. The TaqMan probes are among the most popular specific methods of detection in real time and are commercially available. The TaqMan probe contains both a fluorescer and a quencher in close proximity to one another which inhibits fluorescence in the probe hybridized to the target amplicon or in excess probes in solution. The fluorochrome is released from the vicinity of the quencher by the digestion of the probes during the copying of the amplicon strand by the Taq polymerase having a 5'-3' exonuclease activity. They provide a detectable molecule that accumulates in the solution during the successive cycles.

The use of linear (TaqMan probe) or hairpin (molecular beacon) probes having a quencher and a fluorescer molecule has some important drawbacks. First, the probe is a complicated molecule to synthesize and is expensive. Second, a different fluorescer is necessary for each amplicon to be quantified. This feature limits the number of amplicons possibly detected in the same assay. Third, the distance between the fluorescer and the quencher is crucial to a have an effective quenching of the fluorescer for the free probe. The presence of a secondary structure in the probe may affect the distance between the fluorescer and the quencher and, as a consequence, the free probe is not properly quenched.

U.S. Pat. No. 5,716,784 provides an alternative method based on the use of two complementary probes, a first, analytical probe being labeled at its 5' terminus with an energy transfer donor fluorophore, and a second, detection probe being labeled at its 3' terminus with an energy transfer acceptor fluorophore. Quantitative detection of oligonucleotide analytical probe hybridized in solution to the oligonucleotide detection probe provides a measure of the amount of oligonucleotide analytical probe used up in the amplification of the target nucleic acid sequence and thus provides a measure of amount of target nucleic acid sequence amplified in the PCR replication procedure. The quantitative detection of the analytical probe involves spectrophotometrical energy transfer detection in solution.

U.S. Pat. No. 5,928,907 describes an apparatus for monitoring the formation of a nucleic acid amplification reaction product in real time that uses an optic fiber focused in the volume of the sample. The fluorescence is usually detected in the solution trough the tip or the bottom of the tubes or the wells.

Although these methods are capable of monitoring in real time the quantification of nucleic acids in a homogeneous PCR hybridization system, they are limited to the quantification of one target nucleic acid per fluorescent dye. Multiplexing is not easy to implement due to the fact that the detector has to be able to detect as many fluorescent dyes as there are targets or standards in the solution. This requires the use of non overlapping fluorescent dyes for measuring the increase in signal related to the amplification of several individual target nucleic acid sequences in the same apparatus. In most of the applications, one fluorescent probe is used, and sometimes 2. The use of a larger number of probes would lead to a dramatic increase in the complexity and cost of the detection system since each probe requires specific excitation and the emission wavelengths.

WO 04/101733 discloses a wash-free PCR amplification tube for direct gene detection. A molecular beacon is immobilized inside the reaction tube that is designed for the PCR purpose. The PCR tube also comprises a transparent window at the section where the molecular beacon is fixed inside the PCR tube. The immobilized probe comprises a fluorescer and a quencher. The quencher is positioned at the free end of the probe. During the PCR, the quencher is released from the vicinity of the fluorescer by the digestion of the immobilized probes during the copying of the amplicon strand by the Taq polymerase having a 5'-3' exonuclease activity. They provide a detectable molecule that accumulates on the support during the successive cycles.

This method is very close to the real-time PCR performed in solution. In both cases, the probe parties involved in the amplification step.

The use of a molecular beacon as capture molecule (immobilized on a support) presents further drawbacks as compared to the molecular beacon used in solution. As the PCR is performed on a probe that is in the proximity of a solid support, it is much less efficient and more difficult to implement than a PCR performed in solution. The situation is even more dramatic when multiple molecular beacons are used on the same support, such as arranged in a micro-array, to quantify different targets, because the basic fluorescent background (without target) is different from probe to probe. As a result the quantifications of the different targets are difficult to calibrate.

The present invention aims to provide a device for a method that has the advantages of the real time PCR methods described here above using specific probes for the detection, but that overcomes the limitations of single (or very few) detection per assay and/or the complexity of the design of labeled probes having both specificity and physico-chemical constraints such as quenching or FRET.

### BRIEF SUMMARY OF THE INVENTION

The present invention aims to overcome most of the above mentioned limitations by proposing a simple and effective lid being part of a device having multiwells for performing simultaneous amplifications by PCR and detections of multiple target molecules on unlabeled capture molecules immobilized on the lid.

In order to realize the above-mentioned objectives, the invention relates to a sealable lid (1) for a PCR multiwell plate (2) provided with at least one defined area (3), said defined area being configured to be mated to at least one well (4) of the multiwell plate (2), at least one of said defined area (3) being pretreated to be provided with unlabeled capture molecule (5). The lid allows real-time PCR to be performed both in parallel assays and in multi-detections per assay.

The sealable lid (1) is also provided with at least one defined area (3), said defined area being configured to be mated to at least four wells (4) of the multiwell plate (2), at least one of said defined area (3) being pretreated to be provided with unlabeled capture molecule (5).

One feature of the invention is that the capture molecules are not taking part in the PCR reaction and thus do not interfere with the PCR happening in the solution.

### BRIEF DESCRIPTION OF THE DRAWINGS

The features and advantages of the invention will be appreciated upon reference to the following drawings, in which:

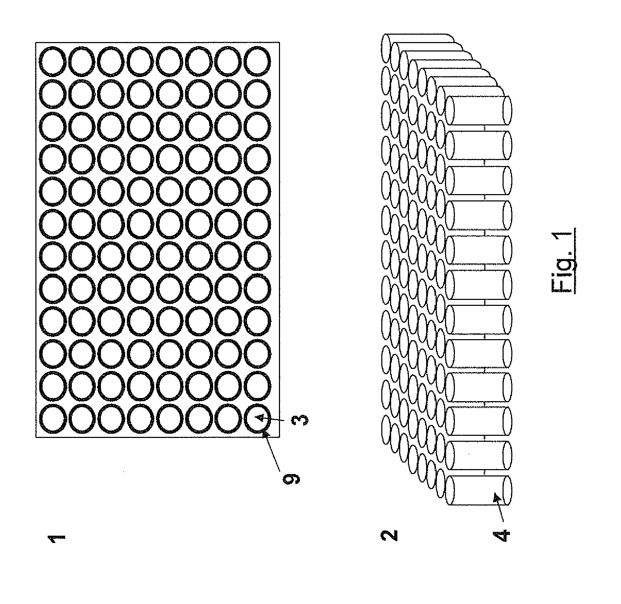

Figure 1 is a general schematic representation of a preferred sealable lid (1) according to the invention, comprising a plurality of defined areas (3), each defined area corresponding to at least one well (4) of the multiwell plate (2) on which it can be mated by a sealable material (9).

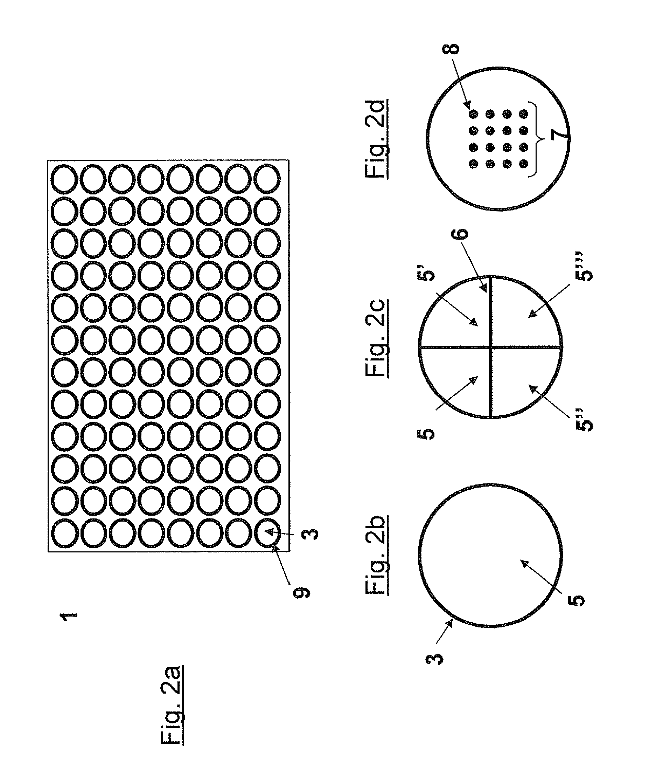

Figure 2a is a general schematic representation of a preferred sealable lid (1) being configured to be mated to a multiwell plate by means of a sealable material (9).

Figure 2b shows a detailed top view of a defined area (3) carrying immobilized capture molecules (5).

Figure 2c shows another embodiment for the defined area (3) being divided in four compartments (6), each compartment carrying different capture molecules (5, 5", 5", 5"'). Figure 2d shows an alternative embodiment for the defined area (3) carrying capture molecules being immobilized according to a micro-array (7) in specifically localized areas (8).

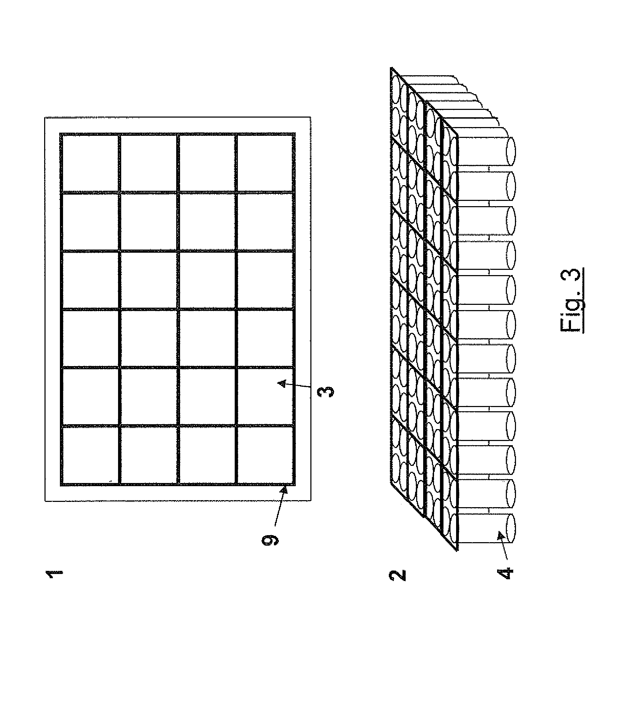

Figure 3 is a general schematic representation of a preferred sealable lid (1) according to the invention, comprising a plurality of defined areas (3), each defined area corresponding to at least four wells (4) of the multiwell plate (2) on which it can be mated by a sealable material (9). This lid is preferably used for end point measurement of PCR product. After the PCR, the multiwell plate (2) is flipped and the content of four wells comprising four different PCR products is contacted with one defined area (3) carrying immobilized capture molecules (5).

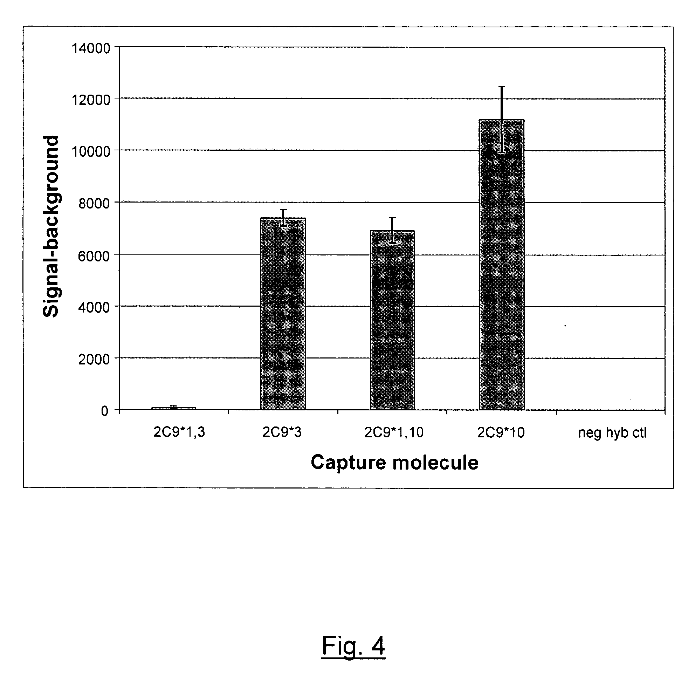

Figure 4. Results for the end point measurement of SNP (single nucleotide polymorphism) in PCR products using a preferred lid of the invention as provided in figure 3. Three PCR were performed in individual tubes of a 96-wells plate using cy3 labeled primers. Each tube contained a different SNP of the *CYP2C9* gene: mutation 3 of exon 7, mutation 10 and corresponding wild type sequence of exon 5 and the corresponding primer pairs. A lid comprising a defined area having fixed upon its surface a microarray was fixed on the top of the three PCR tubes by means of an adaptor. The microarray contained the different capture molecules specific of the three amplicons (2C9*3 for mutation 3 of exon 7; 2C9*1,10 for wild type sequence of exon 5 and 2C9* 10 for mutation 10 of exon 5). In addition, we used a control capture molecule having a substituted base at the location of the mutation 3 of exon 7 (2C9*1,3) and a negative hybridization control (neg hyb ctl). After the PCR, the multiwell plate was flipped and the content of three wells comprising three different PCR products was contacted with the defined area carrying immobilized capture molecules. After hybridization, the multiwell plate was flipped back, centrifuged to remove the PCR solution from the lid and the micro-array was read in fluorescence using a confocal scanner. The result shows signals on the specific capture molecules 2C9*3, 2C9*1,10 and 2C9* 10 as expected.

### DESCRIPTION OF ILLUSTRATIVE EMBODIMENTS

The following is a description of certain embodiments of the invention, given by way of example only and with reference to the drawings.

### Definitions.

The terms "nucleic acid", "oligonucleotide", "array", "probe", "target nucleic acid", "bind substantially", "hybridising specifically to", "background", and "quantifying" are as described in the international patent application WO97/27317, incorporated herein by reference.

The terms "nucleotide triphosphate", "nucleotide", and "primer sequence" are as described in the document WO00/72018, incorporated herein by references.

The terms "Homologous sequences" and "consensus sequence" are described in the European patent application WO01/77372, incorporated herein by reference. The term "homology" is intended to mean the degree of identity of one polynucleotide sequence to another polynucleotide sequence. There may be complete homology (i.e. 100% identity) between two or more polynucleotides. The degree of homology is calculated after alignment of the sequence and may be determined by any method well known to a person skilled in the art.

As used herein, "capture molecule" refers to a molecule, or complex or combination of molecules, that is capable of specifically binding to one target molecule, or to a family of target molecules, or to one or more member (s) of a plurality of target molecules, or portion(s) thereof. The capture molecules are preferably nucleic acids, which are either synthesized chemically *in situ* on the surface of the support or synthesized *ex situ* and subsequently affixed to the support. Nucleic acid binding is achieved via base pairing between two polynucleotides, one being the immobilized capture molecule and the other one the target to be detected. Capture molecules also comprise derivatives of the nucleic acid, such as PNA or LNA, as long as they can bind specifically the target polynucleotide molecule.

The term "single capture molecule species" is a composition of related polynucleotides for the detection of a given sequence by base pairing hybridization or by molecular recognition between polypeptides or proteins. Polynucleotides are synthesized either chemically or enzymatically, or isolated from samples, but the synthesis or isolation is not always perfect and the capture molecule is contaminated with other related molecules, like shorter polynucleotides. The essential characteristic of one capture species for the invention is that the overall species can be used for capture of a given target nucleotide molecule.

The term "polynucleotide sequences that are complementary to one or more genes or to the genome sequence" described herein, refers to polynucleotides that are capable of hybridizing under stringent conditions to at least part of the nucleotide sequence of said genes or genome or copy thereof. Polynucleotides also include oligonucleotides (comprising more than 2 bases but fewer than 100 bases), which can be used under particular conditions. Such hybridizable polynucleotides will typically exhibit at least about 75% sequence identity at the nucleotide level to said genes or genome, preferably about 80% or 95% sequence identity or preferably more than 95% nucleotide sequence identity to said genes or genome. They are composed of either small sequences typically 15-30 bases long, or longer ones being between 30 and 100 or even longer, between 100 and 800 bases long, depending on the specificity and sensitivity requirements for the assay.

"Micro-array" means a support on which multiple capture molecules are immobilized in order to be able to bind to the given specific target molecule. The micro-array is preferentially composed of capture molecules present at specifically localized areas on the surface or within the support or on the substrate covering the support. A specifically localized area is the area of the surface that contains bound capture molecules specific for a determined target molecule. The specific localized area is either known from the method that was used in building the micro-array, or is defined during or after the detection. A spot is the area where specific target molecules are fixed on their capture molecules and seen by the detector. The micro-array may also contain detection controls which are labeled. These controls check the performance of the detection and circumvent the array, but they are not used to detect specific target molecules. In one particular application of this invention, micro-arrays of capture molecules are also provided on different supports, as long as the different supports contain specific capture molecules and may be distinguished from each other in order to be able to quantify the specific target molecules. This can be achieved by using a mixture of beads having particular features and being able to be distinguished from each other in order to quantify the bound molecules. One bead or a population of beads is then considered as a spot having a capture molecule specific of one target molecule.

The "amplicon" of the invention means target nucleotide molecules being the result of PCR amplification of a nucleotide molecule present in a biological material.

"Intermittent contact" means to be physically in contact or not according to some time frame. In a particular aspect of the invention the PCR solution is in intermittent contact with the capture molecule, means the PCR solution is moved or displaced from the surface having fixed the capture molecules for a given time period (non contact) and then it is moved back to its original position (contact). Preferably more than 95% and preferably more than 99% of the PCR solution is moved or displaced in the reaction chamber. The PCR solution is preferably displaced by gravity drain resulting from a change in orientation of the reaction chamber, preferably rotation, translation, or lateral movement of the reaction chamber.

### Description of a preferred embodiment

The lid of the invention is specifically designed to perform an end point measurement of PCR product or a real-time measurement of the PCR after being sealed on a multiwell plate. The lid comprises at least one defined area that is pretreated to be provided with capture molecules or having capture molecules immobilized by a consumer depending on his requirement. Home made immobilization is performed on pretreated lid for the fixation of the desired capture molecules. The capture molecules are specifically designed for the detection of amplified target nucleotide molecules.

The lid contains at least 2, preferably at least 6, more preferably at least 24, still more preferably at least 96 defined areas. The multiwell plate comprises preferably at least 2, preferably at least 8, more preferably at least 24, still more preferably at least 96, even more preferably at least 384 wells. Wells are separated from each other by a pitch of 4.5, or a multiple thereof, such as 9 mm. The multiwell plate is a preferred format for performing different PCR assays in parallel. Multiplexing is obtained by using different wells carrying different PCR products that are contacted with different defined areas of the lid carrying one or more capture molecule(s). The number of capture molecules per defined area can be adapted according to the consumer requirement.

In a preferred embodiment, the defined area of the lid has fixed upon its surface at least 4 different capture molecules that are physically separated in compartments. In another preferred embodiment, the defined area of the lid has fixed upon its surface a micro-array comprising at least 5 different capture molecules being immobilized in specifically localized areas of said defined area. Preferably, the micro-array comprises more than 10 different capture molecules, preferably more than 20 capture molecules, more preferably more than 50 capture molecules.

In still another preferred embodiment, different defined areas of the same lid have fixed the same capture molecules.

In a preferred embodiment, capture molecules are polynucleotides used to detect target nucleotide molecules that are labeled during the PCR.

Also, the capture molecules preferably have an amplicon-specific binding sequence (capture portion), and a spacer portion bound to the chamber surface. The immobilized capture molecule is preferably a polynucleotide having an amplicon-specific binding sequence, and a spacer portion of at least 20 nucleotides, preferably at least 50, more preferably more than 90 nucleotides.

Advantageously, the measurement of the amplified target nucleotide molecules is performed on the lid of the multiwell plate after hybridization on capture molecules.

Advantageously, the lid is not removed for the detection and there is no washing before the measurement. The assay of amplification and detection is performed in a closed well of the multiwell plate. Washing is avoided since it would include liquid handling of the solution containing amplified target and may entail possible contamination of further assays.

In a preferred embodiment, the measurement of the bound labeled amplicons is performed in the absence of liquid. Preferably, the absence of liquid is obtained by gravity drain, such as resulting from changing the orientation of the reaction chamber. For example, changing the orientation of the reaction chamber by a method selected from the group consisting of: rotation, translation, flipping or lateral movement of the reaction chamber.

One defined area of the lid is exactly aligned with one well or with more than one well depending on the application.

In a preferred embodiment, the lid is used for real-time PCR measurement. The measurement of the target bound to the lid is repeated during at least two thermal cycles, preferably during the annealing temperature step of the cycle. Preferably the detection is performed in each of the PCR cycles. Advantageously, and contrary to the real-time PCR performed in homogeneous phase, there is no requirement for different fluorescent dyes to quantify different nucleotide molecules. One fluorescent dye is sufficient for the quantification of multiple different target nucleotide molecules since they are individualized on the defined area of the lid because of their specific binding by hybridization on capture molecules being specific of each target nucleotide sequence and being localized in distinct areas of the defined area of the lid (compartment or spot of a micro-array). When several nucleotide molecules are amplified in the same solution using the same or different primers, both amplicons will be labeled with the same fluorescent dye but they will be detected and/or quantified on separated capture molecules having a different position on the lid without the need of several fluorescent dyes as required in the real time PCR performed in solution.

In another preferred embodiment, the lid is used for end point PCR measurement. The measurement is performed only at the end of the amplification. In this application, one defined area of the lid corresponds to one or more wells. In a preferred embodiment, each defined area corresponds to at least four wells of the multiwell plate. This is particularly advantageous in case of multiplex PCR. The use of more than 5 primer pairs in a PCR well often decrease the efficiency of the amplification due to the formation of primer dimers and non-specific annealing of the primers. The PCR can be split in different wells, each well having a limited number of primer pairs. At the end of the amplification, the PCR products are pooled and hybridized on the same capture molecules being present on a single defined area of the lid. This embodiment is performed at best by flipping the multiwell plate in order to pool the content of the separated wells and contacting the mix with one defined area of the lid for hybridization.

Advantageously, and contrary to end point measurement of PCR products performed in the state of the art, there is no requirement for opening the multiwell plate for hybridization and detection, thus avoiding subsequent manipulation and carry over contamination.

Another advantage is that primer dimers or non-specific amplified products formed during the PCR amplification will not generate a signal on the lid since no complementary capture molecules for the primers nor for unspecific products are present on the lid.

The specificity can still be increased further by the use of different capture molecules for the same target nucleotide molecule. Two or more capture molecules can be designed to bind the same strand or one capture molecule may be provided to bind the sense strand of the amplified product and another capture molecule the antisense strand.

Advantageously, the nucleotide molecules to be amplified are homologous nucleotide sequences that are quantified on micro-array during the PCR using consensus primers as described in WO0177372. The same primers are used to amplify all the homologous sequences which are possibly present in a sample. The amplicons are discriminated on different capture molecules, each one targeting a different homologous sequence. So with only one primer pair and one fluorescent dye, the assay is made multiplex by the use of consensus primers for the PCR and multiple capture molecules present on the micro-array for their detection.

In a preferred embodiment, the capture molecules are attached preferably by covalent link in the defined area of the lid. In a preferred embodiment, the capture molecules are terminated by a primary amino group and are covalently fixed on the defined area having fixed upon their surface aldehyde groups. Such reaction does not require any coupling agent and results in the formation af imine covalent link. This link can be further stabilized into amine function by a reducing agent preferably in the presence of a solution of NaBH₄.

Deposition of the capture molecules on the lid can be performed by a company upon request or by the consumer himself. Deposition of the capture molecules by the consumer is preferentially done by pipetting the capture molecules solutions in different compartments of the main defined area. In a preferred embodiment, the defined area is divided in at least 4 compartments. Deposition of the capture molecule in the form of a micro-array is preferentially done with physical means such as plain pin or split pin or "pin and ring" having a physical contact with the surface, or by release of a micro-droplet of solution by methods such as piezo or nanodispenser.

Alternatively, *in situ* synthesis of capture molecules is performed on the support using light directed chemical synthesis for the synthesis of oligonucleotides or polynucleotides in known locations such as provided by US patents 5,744,305 and 5,346,413.

In a particular embodiment, the lid surface is activated in order to provide reactive groups for the fixation of capture molecules. The pretreated lid preferentially bears aldehyde, epoxide or N-hydroxymaleimide or any chemical group on which a capture molecule will react by chemical reaction with such as but not limited to free amino or sulfhydryl groups. Pretreated lids have the same embodiments as described here above.

According to the invention, the lid comprises or is made of a material selected from the group consisting of glass, metal, polymer (preferably thermo-resistant having low self-fluorescence) or any other material used in the micro-array technology (preferably activated glass bearing aldehyde or epoxide or acrylate groups), said lid optionally further comprising also specific coatings, markers or devices (bar codes, electronic devices, etc.) for improving the assay.

Although glass presents many advantages (like being inert and having a low self-fluorescence), other supports such as polymers, with various chemically well-defined groups at their surface, allowing the binding of the nucleotide sequences are useful. In another preferred embodiment, the support bearing the capture molecules has a 3 dimensional porous structure. Conventional glass slides have less than 60% silicon dioxide on their surface. This inherently limits the amount of chemical bonding available on the surface. Porous material exhibits an increased loading capacity of capture molecules. Typical porous supports include gel pads, fused-fiber matrix and fibrous polymer matrix. The capture molecules can be immobilized entirely in the porous material, or on a layer of porous material mounted on top of a flat surface such as glass, plastic, or metal.

Besides glass, polymers are becoming increasingly used as support for micro-array and for the miniaturisation of the biological assays due to the development of the microfluidic technology and the "lab on a chip" concept. In a preferred embodiment, the polymer material of the lid is selected from the group consisting of: polycarbonate (PC), polyethylene (PE), Cycloolefin copolymer (COC), cyclic olefin polymer (COP) or a mixture thereof. A preferred COP product is Zeonex® because of its excellent optical properties, chemical resistance, thermal stability and low fluorescence (http://www.zeonchemicals.com).

In a preferred embodiment, the defined area of the lid is configured to be mated to at least one well of a multiwell plate by means of a sealable material. The sealable material is preferably made of a soft polymer or a glue which surrounds each defined area in order to assure a perfect sealing to the corresponding well of the multiwell plate.

In another preferred embodiment, the defined area is configured to be mated to at least one well of the multiwell plate by using an adaptor comprising a sealable material. The adaptor is preferably made of a soft polymer which is placed between the lid and the multiwell plate and assures a perfect sealing between a defined area of the lid and the corresponding well of the multiwell plate. If necessary, pressure can be applied to the lid to obtain a sealing with the multiwell plate.

In another preferred embodiment, the surface of a defined area of the lid bearing the capture molecule is maintained flat at temperature higher than 85°C, preferably higher than 95°C. The hybridized amplicons have to be detected by a detector and preferably the different localized area that contain different capture molecules and present in a defined area have to show the same signal intensity if bound with the same amount of targets. Thus in a preferred embodiment a defined area of the lid has a flatness tolerance of less than 100 microns preferably of less than 25 microns.

In a preferred embodiment, the lid is thermo-resistant and is maintained flat at temperature higher than 85°C. In another preferred embodiment, the light transmittance of the lid at the wavelength used for the detection is higher than 80% and even higher than 90%.

In another preferred embodiment, the signal detected trough the window resulting from the binding of the amplicons to the immobilized capture molecules is at least 2 times, preferably at least 5 times, more preferably at least 10 times higher than the signal obtained in the absence of amplicons or in conditions in which no binding can take place.

In the preferred embodiment, the polynucleotides being used as capture molecule are between 10 and 1000 nucleotide long and preferably between 100 and 400 nucleotides long. For specific binding of homologous sequences possibly present in the same sample, the polynucleotide capture molecules contain a spacer portion according to the patent WO0177372. Specific binding of homologous sequences or SNP possibly present in the same sample, are obtained using capture molecules having a specific part of between 10 and 30 nucleotides.

In a preferred embodiment, the polynucleotides that are used as capture molecules are present on the micro-array localized area at a density superior to 10 fmoles per cm², and preferably more than 100 fmoles per cm² surface of the solid support.

The micro-array according to this invention contains between 4 and 100000 spots per cm² and preferably between 20 and 1000 spots per cm². Each spot is preferably the localized area for one capture molecule. Miniaturization allows performing one assay upon a large number of surface spots (usually circular spots of about 0.1 to about 1 mm diameter). A low density array, containing 20 to 400 spots is easily obtained at low cost with pins of between 0.2 and 0.4 mm of diameter. Higher density of spots up to 1,600 spots per cm2 can be obtained by reducing the size of the spots for example between 0.1 mm and 0.2 mm diameter. Methods for obtaining capture molecules of higher density have been described earlier as in US 5,445,934. Miniaturization of the spot size allows for a high number of data to be obtained and analyzed simultaneously, the possibility to perform replicates and with only a small amount of biological sample being necessary for the assay. Miniaturization for detection on micro-arrays is preferably associated with microfluidic substrate for separation, extraction of nucleotide molecules from a cell extract.

In a preferred embodiment, the localized area is comprised between about 10 µm² and about 1 mm² and preferably between about 1 µm² and about 100 µm².

In one preferred embodiment, the capture molecules present on the lid are complementary to at least one part of the sequence of an amplified target nucleotide sequence present in solution. The capture molecules comprise a nucleotide sequence that is able to specifically bind the amplified target nucleotide sequence, said specific nucleotide sequence (capture portion) is also preferably separated from the surface of the solid support by a spacer arm (spacer portion) of at least about 6.8 nm or 20 nucleotides in a double stranded form, and which has no binding affinity for the amplified target molecule. In a preferred embodiment, the capture molecule is a single stranded polynucleotide containing a capture portion able to specifically bind the labeled target nucleotide molecule and a spacer portion of at least 20 nucleotides and preferably more than 90 nucleotides. The spacer portion can be either single or double stranded DNA.

In a preferred embodiment the capture portion of the capture molecule is comprised between 15 and 100 nucleotides and more preferably between 15 and 35 nucleotides.

Detectable labels suitable for use in the present invention include any composition detectable by electromagnetic light emission. In a preferred embodiment, the target molecules are labeled with a fluorescent dye. The fluorescent label is preferably incorporated into the target by enzymatic or chemical reaction. Typical enzyme reaction includes the incorporation of nucleotide analogues into the target. Alternatively, primers labeled at their 5' end with a fluorescent dye are incorporated into the target. Fluorochromes are also incorporated into the targets by chemical reaction such as the reaction of fluorescent dye bearing a N-hydroxysuccinimide (NHS) group with amines groups of the targets. Useful fluorescent dyes in the present invention include Cyanine dyes (Cy3, Cy5, Cy7), Fluorescein, Texas red, Rhodamine, Green Fluorescent Protein. Preferably, the excitation wavelength for Cyanin 3 is comprised between 540 and 558 nm with a peak at 550 nm and the emission wavelength is comprised between 562 and 580 nm with a peak at 570 nm.

Preferably, the excitation wavelength for Cyanin 5 is comprised between 639 and 659 nm with a peak at 649 nm and the emission wavelength is comprised between 665 and 685 nm with a peak at 670 nm. Preferably, the excitation wavelength for Cyanin 7 is comprised between 733 and 753 nm with a peak at 743 nm and the emission wavelength is comprised between 757 and 777 nm with a peak at 767 nm.

Patents teaching the use of such labels include U.S. Patent Nos. 3,817,837; 3,850,752; 3,939,350; 3,996,345; 4,277,437; 4,275,149; and 4,366,241. In a preferred embodiment, the fluorescent dye is Cyanin 3, Cyanin 5 or Cyanin 7.

The original nucleotide molecule is not necessary labeled in the sample but should lead to amplified labeled target molecules during the amplification step. The amplified nucleotide molecules are able to hybridize on the capture molecules after a denaturation step. As the amplified nucleotide molecules are double stranded, in theory they should reassociate in solution much faster than they hybridise on capture molecules fixed on a solid support where diffusion is low and the specific binding sequence is short, thus reducing even more the rate of reaction. Therefore, it was unexpected to observe a significant signal increase on the capture molecules over multiple thermal cycles after a short period of incubation time.

In a particular embodiment the measurement is performed on bound target labeled molecules present on the lid while they reassociate in a double stranded form in the solution during annealing and/or elongation of the thermal cycle.

Advantageously, the length of the amplified target nucleotide molecules are selected as being of a limited length preferably between 100 and 2000 bases, preferably between 200 and 1500 bases, and still more preferably between 300 and 800 bases. This preferred requirement depends on the possibility to find primers to amplify the required sequences possibly present in the sample. Too long target may reallocate faster and adopt secondary structures which may inhibit the fixation on the capture molecules.

The thermal cycler is adapted to fit the support format of a 96 wells multiwell plate. The alternative heating and cooling is preferably obtained using a Peltier element or pulsed air.

In a preferred embodiment, the light beam is a laser beam which is focused on the surface of the lid defined area in order to excite directly the fluorescent molecules. The laser beam is preferably focused perpendicular to the surface of the lid. The emitted light is detected in the opposite direction of the excitation laser beam. The emitted light is preferably detected as a confocal light and measured after amplification by a photomultiplier. In a preferred embodiment the surface of the lid defined area is scanned by the laser beam in order to obtain a maximum light excitation of the bound targets.

In a preferred embodiment, the signal associated with a capture molecule on the lid defined area is quantified. The preferred method is the scanning of the array(s) with a scanner which is preferably a laser confocal scanner for the detection of fluorescent labeled targets. The resolution of the image is comprised between 1 and 500 µm and preferably between 5 and 50 µm.

The lid defined area is preferably scanned and each localized area of the micro-array or each compartment is subsequently measured. Preferably the scanning of the array is performed within 1 min, more preferably within 30 sec and still more preferably within 10 sec. If reading is repeated over multiple thermal cycles, the scan of each localized area preferably is measured at the same precise moment of a temperature step.

A subsequent measurement of different defined areas of the lid can be advantageously used to monitor a kinetic of hybridization of a labeled target nucleotide molecule on the same capture molecule which has been immobilized at different defined areas of the support and which are scanned in a time dependent manner.

In a particular embodiment, the data on the quantification of the amplified target molecules performed at different PCR cycles are processed in order to quantify the amount of nucleotide molecule present in the original solution before the amplification. The amplification cycles lead to the doubling of the target sequence in each cycle when the efficiency of the amplification is maximal. Quantification of the original nucleotide concentration is calculated from the extrapolation of the first cycle that gives a detectable value or from a value crossing a fixed threshold. The concentration is then calculated from a reference curve or from the data obtained on a standard molecule.

In a preferred embodiment, the data are processed in order to obtain a signal value for each of the localized area. In another embodiment, the data are processed in order to obtain a signal value for each of the localized area and for the local background. The data are further processed by subtracting the background from the signal value for each of the localized area.

In a preferred embodiment, the quantification of the amount of nucleotide molecule is performed by comparing the signal value of the localized area with a fixed value. In an alternative embodiment, the quantification of the amount of nucleotide molecule is performed by comparing the number of thermal cycles necessary to reach a fixed value (cycle threshold or CT) with the CT of a reference nucleotide molecule. The reference nucleotide molecule is preferably amplified in the same solution and detected on the same micro-array as the target nucleotide molecule.

In another embodiment, the quantification of the amount of nucleotide molecule is performed by comparing the number of thermal cycles necessary to reach a fixed value (CT) with a standard curve wherein the CTs are plotted against standard concentrations.

### EXAMPLES

### Example 1. Preparation of a lid activated with aldehyde groups

A lid in Zeonex® having 96 defined areas sealable on a 96-wells plate (as provided in figure 1) was functionalized for the presence of aldehyde groups according to the following protocol.

1. Preparation of aminated Lid

The primary amines functions were introduced into all defined areas of a lid made of COC Zeonex 330R by ammonia plasma treatment. Surface modifications were performed by conventional low-pressure rf plasma discharges in NH₃ plasma. The multiwell plates were positioned on trays, and the trays were placed into the chamber. The electrodes had the same size as the trays, so that the samples were covered and treated homogeneously. Distance between electrode and sample was 8 cm. After introduction of the samples in the reactor chamber (W 305 mm, H 300 mm, L 370 mm) and pumping down to 8 x 10⁻² mbar (vacuum pump: Leybold, Type D16B), the gas flow was started and the plasma discharge was performed (working pressure 0.3 mbar, 40 kHz Generator with 30 % power; discharge time 5 min).

2. Preparation of dextran polyaldehyde

2.5 g of dextran (Molecular Mass 70000; Aldrich n° D1537) was dissolved in 50 ml distilled water, then 3.594 g of potassium periodate (15.6 mmol; Aldrich n° 322423) was added. The preparation was shaken vigorously for 14 h at room temperature in the dark and dialyzed for 3 days at 4°C (cut-off of 10000; 3 times 1 litre of distilled water). The solution was centrifuged and lyophilized. 2.15 g of dextran polyaldehyde were obtained (yield: 86%), which were stored at room temperature until use. 0.125 g of dextran polyaldehyde was dissolved in 12.5 ml of phosphate buffer 0.1 M pH 6. The mixture was heated a few minutes at 60°C under vigorous stirring until complete dissolution (final solution 1 %). The solution was cooled to room temperature before use.

3. Preparation of aldehyde lid

70 µl of dextran polyaldehyde solution obtained at step 2 were added in each defined area of the lid carrying amino groups. The lid was coved and incubated for 2 h at room temperature, then washed 3 times with distilled water. The lid was stored under vacuum until use.

### Example 2. Capture molecule immobilization in defined areas of a lid

A lid in Zeonex® having 96 defined areas sealable on a 96-wells plate was functionalized for the presence of aldehydes according to the method described in example 1. Aminated DNA was then spotted according to a micro-array in the defined areas of the lid derivatized with aldehyde groups. The aminated capture molecules were spotted from solutions at concentrations of 3 µM. The capture molecules were printed onto the wells using split pins (n° 1545 Genetix Limited). After the spotting, the defined areas of the lid were washed once for 1 min with 0.2% SDS, twice with distilled water. The defined areas were then incubated for 5 min with NaBH₄ solution (2.5 mg/ml of PBS 75%/ Ethanol 25%), washed twice with distilled water and dried. The lid was stored under vacuum at 4°C.

### Example 3. End point measurement of SNP in PCR products using a lid carrying a micro-array

Three PCR were performed in individual wells of a 96-well plate using cy3 labeled primers. The first PCR was performed on a plasmid containing the sequence of the exon 7 from *CYP2C9* gene which containing the mutation 3. The second PCR well was performed on a plasmid containing the exon 5 from *CYP2C9* gene which had the sequence for the wild type corresponding to the mutation 10. The third PCR well was performed on a plasmid containing the exon 5 from *CYP2C9* gene which had the sequence containing the mutation 10. All wells contained the primer pairs for the amplification of the sequences.

Capture molecule immobilization in a defined area of a lid

The Diaglass slides (Eppendorf, Hamburg, Germany) were functionalized for the presence of aldehydes according to the method described in patent application WO02/18288. The protocol described in this patent application was followed for the grafting of aminated DNA to a defined area of the aldehyde derivatized glass slide. The aminated capture molecules were spotted from solutions at concentrations of 3 µM. The capture molecules were printed onto microscopic glass slides with a home made robotic device using 250 µm diameter pins. The spots were 400 µm in diameter and the volume dispensed was about 0.5 nanolitre. Slides were dried at room temperature and stored at 4 °C until used.

The capture portion of the capture molecules used in this experiment had the following sequences:

The mutated base is underlined as compared to the wild type sequence.

2C9*3 (SEQ ID NO: 1, mutation 3):

5'- GGTGGGGAGAAGGTCAAGGTA -3'

2C9*1,3 (SEQ ID NO: 2, wild type of mutation 3):

5'- GGTGGGGAGAAGGTCAATGTA -3'

2C9* 1,10 (SEQ ID NO: 3, wild type of mutation 10):

5'-CTTCCTGATGAAAATGGAGAAGG -3'

2C9* 10 (SEQ ID NO: 4, mutation 10):

5'- CTTCCTGATGAAAATGGGGAAGG -3'

AATSauG2 (negative hybridization control) (SEQ ID NO: 5):

5'-AACTGCTGGACTTATTTTAGGTAAGAG -3'

Each capture molecule comprised a spacer portion of 90 bases long at the 5' end of the capture portion, said spacer portion having the following sequence:

PCR and hybridization

The *CYP2C9* gene contains mutations in the exons 5 and 7. The DNA template for the PCR is a plasmidic DNA obtained by cloning the entire exon 5 in vector pGEMT Easy and exon 7 in vector pCR4 Topo. They were amplified by PCR using the following primers.

Primer pair 1, for exon 5

MP2C906 (SEQ ID NO: 6):

5'- GCTTTGTACTATCAATCAGGTTGTC -3'

MP2C902 (SEQ ID NO: 7):

5'- Cy3- CACAAATTCACAAGCAGTCACATAAC -3'

Primer pair 2, for exon 7

MP2C903 (SEQ ID NO: 8):

5'- Cy3- CTAAAGTCCAGGAAGAGATTGAACG -3'

MP2C904 (SEQ ID NO: 9):

5'- CAGAGTGTTGATTTGACAAGATTTTAC -3'

The expected sizes of the amplicons were 626 bp for *CYP2C9* exon 5 and 1114 bp for *CYP2C9* exon 7.

The amplicon resulting from the amplification with primer pair 1 was specific of capture molecules SEQ ID NO: 3 or 4. The amplicon resulting from the amplification with primer pair 2 was specific of capture molecules SEQ ID NO: 1 or 2.

The PCR were performed in individual tubes (200 µl) of a 96-wells plate on plasmidic DNA in a final volume of 50 µl. For the first PCR tube, the PCR mixture was the following: 1x concentrated Topo Buffer, dNTP mix (each of dNTP at a final concentration of 200 µM), 0.25 µM of primer MP2C902 Cy3 labelled at 5' end (SEQ ID NO: 7), 0.125 µM of MP2C906 (SEQ ID NO: 6), 0.25 µM of primer MP2C903 Cy3 labelled at 5' end (SEQ ID NO: 8), 0.125 µM of MP2C904 (SEQ ID NO: 9), Topo Taq DNA polymerase at 2.5U in 50 µl, potassium glutamate at 150 mM. We added 25 ng of plasmidic DNA of exon 7 of CYP2C9 carrying the mutation 3. For PCR tube 2 and 3, plasmidic DNA corresponding to exon 5 (wild type of mutation 10) and (mutation 10) of CYP2C9 were substituted to the plasmidic DNA of exon 7. The amplicon of tube 1 was supposed to react with capture molecule 2C9*3 (SEQ ID NO: 1), amplicon of tube 2 with capture molecule 2C9*1,10 (SEQ ID NO: 3) and amplicon of tube 3 with capture molecule 2C9*10 (SEQ ID NO: 4).

A glass lid comprising a defined area having fixed upon its surface a microarray was fixed on the top of the three PCR tubes by means of an adaptor. The PCR were performed in a thermocycler (Eppendorf, Hamburg, Germany). Samples were first denatured at 94 °C for 5 min. Then 40 cycles of amplification were performed consisting of 30 sec at 94 °C, 1 min at 63 °C and 1 min at 72 °C and a final extension step of 10 min at 72 °C.

After the PCR, the multiwell plate was flipped and the content of three wells comprising three different PCR products (50 µl each) was contacted with the lid carrying immobilized capture molecules and incubated for 45 min at 60°C. After hybridization, the multiwell plate was flipped back, centrifuged for 1 min at 1440 rpm to remove the PCR solution from the lid and the micro-array was read in fluorescence using the Axon scanner (4100 personal). Scanning was performed with the 532 channel for Cy3 detection at a gain of 600 with a resolution of 20 micrometer.

The scanner used as excitation light a laser which was focussed on the surface of the support. The emission light was detected and amplified by a photomultiplier. After image acquisition, the scanned 16-bit images were imported to the software, 'Genepix 5" (Axon, Union city, Ca, USA) which was used to quantify the signal intensities. The signal was quantified on four capture molecules present in three replicates on the array: 2C9* 1,3 (SEQ ID NO: 2), 2C9*3 (SEQ ID NO: 1), 2C9*1,10 (SEQ ID NO: 3) and 2C9* 10 (SEQ ID NO: 4). The local background was subtracted and signal minus background was plotted against the capture molecules. The arrays also contained a negative hybridization control (neg hyb ctl, SEQ ID NO: 5), and positive detection control labeled with Cy3 present in quadruplicate on the array. The capture molecule used as negative hybridization control was silent.

Result of the end point measurement of SNP in PCR products on the lid is presented in figure 4. The result shows signals on the specific capture molecules SEQ ID NO: 1, 3 and 4 as expected. There was a very small signal on the wild type capture molecule SNP2C9* 1,3 (SEQ ID NO: 2). The signal value was 80 compared to 7303 for the mutated capture molecule 2C9*3 (SEQ ID NO: 1). This value represents only 1% of the positive value. This is due to a small cross reaction of the amplicons with the wild type sequence (SEQ ID NO: 2) due to the close homology of sequence of the capture molecules SEQ ID NO: 1 and 2. The negative control of hybridization (neg hyb ctl) was negative.

For the signal on the mutated capture molecule SNP2C9*10, the value was 11208 and 6938 for the corresponding wild type capture molecule SNP2C9*1,10.

Thus, the invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the spirit and scope of the invention. Accordingly, although specific embodiments have been described, these are examples only and are not limiting upon the scope of the invention.

### Annex to the application documents - subsequently filed sequences listing

## Claims

1. A sealable lid (1) for a PCR multiwell plate (2) provided with at least one defined area (3), said defined area being configured to be mated to at least one well (4) of the multiwell plate (2), at least one of said defined area (3) being pretreated to be provided with unlabeled capture molecule (5).

2. The lid of claim 1, wherein at least one defined area (3) bears an immobilized unlabeled capture molecule (5).

3. The lid of claim 2, wherein the capture molecule (5) is a polynucleotide.

4. The lid of claim 2, wherein different defined areas of the same lid have fixed the same capture molecules.

5. The lid of claim 1, wherein the lid contains at least 2, preferably at least 6, more preferably at least 24, still more preferably at least 96 defined areas (3).

6. The lid of claim 1, wherein the multiwell plate (2) has at least 2, preferably at least 8, more preferably at least 24, still more preferably at least 96, even more preferably at least 384 wells (4).

7. The lid of claim 1, wherein the wells (4) of the multiwell plate (2) which are separated from each other by a pitch of 4.5 mm or a multiple thereof.

8. The lid of claim 1, wherein the measurement of the amplified target nucleotide molecules is performed on the lid of the multiwell plate after hybridization on capture molecules.

9. The lid of claim 1, wherein the lid is used for real-time PCR measurement.

10. The lid of claim 1, wherein the lid is used for end point PCR measurement.

11. The lid of claim 2, wherein the defined area (3) has fixed upon its surface at least 4 different capture molecules (5, 5', 5", 5"') being physically separated in compartments (6).

12. The lid of claim 2, wherein the defined area (3) has fixed upon its surface a micro-array (7) comprising at least 5 different capture molecules being immobilized in specifically localized areas (8) of said defined area (3).

13. The lid of claim 12, wherein the micro-array (7) comprises more than 10 different capture molecules, preferably more than 20 capture molecules, more preferably more than 50 capture molecules.

14. The lid of claim 1, wherein the defined area (3) has aldehyde groups fixed upon their surface.

15. The lid of claim 14, wherein the defined area (3) is divided in at least 4 compartments (6).

16. The lid of claim 14 to 15, wherein the defined area (3) is used to fix capture molecules terminated by a primary amino group.

17. The lid of claim 1, wherein the lid (1) is maintained flat at temperature higher than 85°C.

18. The lid of claim 1, wherein the defined area (3) has a flatness tolerance of less than 100 microns and better of less than 25 microns.

19. The lid of claim 1, wherein the light transmittance of the lid (1) at the wavelength used for the detection is higher than 80%, preferably higher than 90%.

20. The lid of claim 1, wherein the lid (1) comprises or is made of a material selected from the group consisting of glass, metal and polymer.

21. The lid of claim 20, wherein the polymer is selected from the group consisting of: polycarbonate (PC), polyethylene (PE), Cycloolefin copolymer (COC), cyclic olefin polymer (COP) or a mixture thereof.

22. The lid of claim 1, wherein the defined area (3) is configured to be mated to at least one well (4) of the multiwell plate (2) by means of a sealable material (9).

23. The lid of claim 1, wherein the defined area (3) is configured to be mated to at least one well (4) of the multiwell plate (2) by means of an adaptor comprising a sealable material (9).

24. The lid of claim 22 to 23, wherein the sealable material (9) is made of a soft polymer or a glue.

25. A sealable lid (1) for a PCR multiwell plate (2) provided with at least one defined area (3), said defined area being configured to be mated to at least four wells (4) of the multiwell plate (2), at least one of said defined area (3) being pretreated to be provided with unlabeled capture molecule (5).

26. The lid of claim 25, wherein the lid contains at least 2, preferably at least 6, more preferably at least 24, still more preferably at least 96 defined areas (3).

27. The lid of claim 25, wherein the multiwell plate (2) has at least 2, preferably at least 8, more preferably at least 24, still more preferably at least 96, even more preferably at least 384 wells (4).

28. The lid of claim 25, wherein the wells (4) of the multiwell plate (2) which are separated from each other by a pitch of 4.5 or 9 mm.

29. The lid of claim 25, wherein the lid is used for end point PCR measurement.

30. The lid of claim 25, wherein the defined area (3) has aldehyde groups fixed upon their surface.

31. The lid of claim 25, wherein the defined area (3) is divided in at least 4 compartments (6).

32. The lid of claim 25, wherein the defined area (3) is used to fix capture molecules terminated by a primary amino group.

33. The lid of claim 25, wherein the lid (1) is maintained flat at temperature higher than 85°C.

34. The lid of claim 25, wherein the defined area (3) has a flatness tolerance less than 100 microns and better less than 25 microns.

35. The lid of claim 25, wherein the light transmittance of the lid (1) at the wavelength used for the detection is higher than 80% preferably higher than 90%.

36. The lid of claim 25, wherein the lid (1) comprises or is made of a material selected from the group consisting of glass, metal, polymer.

37. The lid of claim 36, wherein the polymer is selected from the group consisting of: polycarbonate (PC), polyethylene (PE), Cycloolefin copolymer (COC), cyclic olefin polymer (COP) or a mixture thereof.

38. The lid of claim 25, wherein the defined area (3) is configured to be mated to at least one well (4) of the multiwell plate (2) by means of a sealable material (9).

39. The lid of claim 25, wherein the defined area (3) is configured to be mated to at least one well (4) of the multiwell plate (2) by means of an adaptor comprising a sealable material (9).

40. The lid of claim 38 to 39, wherein the sealable material (9) is made of a soft polymer or a glue.
